# EUROPEAN PATENT APPLICATION

(11) **EP 3 549 724 A1**
(43) Date of publication of application: **09.10.2019**
(21) Application number: 18192526.4
(22) Date of filing: 04.09.2018
(51) Int. Cl.: B25J 9/16, B25J 11/00

(54) **POSTURE-SWITCHABLE ROBOT AND METHOD OF ADJUSTING POSTURE THEREOF**

(30) Priority: 02.04.2018 CN 201810284007
(71) Applicant: New Era Al Robotic Inc., 105 Taipei City (TW)
(72) Inventor: CHI, Shou-Wei, 105 Taipei City (TW); CHEN, Ting-Shuo, 105 Taipei City (TW)
(74) Representative: 2K Patentanwälte Blasberg Kewitz & Reichel

(57) **Abstract**

A posture-switchable robot (10) and method of adjusting posture thereof are provided. The method is to sense reference motor data of a plurality of motors (13, 20-29) of the posture-switchable robot (10) under a configuration mode, retrieve initial motor data corresponding to an initial posture, and calculating compensation data of the motors (13, 20-29) based on the reference motor data and the initial motor data. The method is further to calculate adjustment motor data based on the compensation data and built-in motor data corresponding to a built-in posture, and drive the motors (13, 20-29) based on the adjustment motor data for making the posture-switchable robot (10) show the adjusted built-in posture. The user can adjust the postures of the posture-switchable robot intuitively without dismounting the motors and a motor calibration instrument.

## Description

### BACKGROUND OF THE INVENTION

### Field of the Invention

The technical field relates to a robot and more particularly related to a posture-switchable robot and a method of adjusting posture thereof.

### Description of Related Art

There is a biped robot having an ability of switching its posture according to a user operation. More specifically, the user may operate a remote controller to control the biped robot to switch from a posture (such as a standing posture) to another posture (such as a walking posture). The biped robot has an ability of showing a plurality of actions via mash-up of a plurality of the postures, so as to make the user have the better fun in operation.

However, after a long time of use, because of the backlash relationship between the motors and the machine components and the problem of loss of machine components, the postures of the biped robot of the related art may become aberrant (such as the biped robot reclining backward when standing or the step length of each feet being different when walking) caused by the error between the motors and the machine components, such that the biped robot doesn't have an ability of showing the postures accurately and may overturn cause by losing its balance.

For solving above-mentioned problems, in the related art, the maintenance manufacturer dismantles all of the motors of the biped robot, executes a calibration on all of the motors by a motor calibration instrument, and puts back the calibrated motors one by one. The above-mentioned solution is too complex for the general user and needs the professional engineer and instrument, such that the general user doesn't have the ability of calibrating the biped robot by himself/herself.

Besides, because the control parameters of the same posture of each of the mass production robots are the same as each other, the shown postures of the biped robots purchased by one user are the same as the shown postures of the biped robots purchased by another user. Above status makes the user be unable to show the user's personal style, and make the user have the worse user experience in operation.

Accordingly, there is currently a need for a schema of adjusting the postures of a robot without dismounting its motors and use of a motor calibration instrument.

### SUMMARY OF THE INVENTION

The present disclosed example is directed to a posture-switchable robot and a method of adjusting posture thereof having an ability of adjusting the postures of the posture-switchable robot via adjusting motor data of the motors of the posture-switchable robot according to the user's operation.

One of the exemplary embodiments, a method of adjusting posture is applied to a posture-switchable robot, the posture-switchable robot comprises a plurality of motors for switching a posture of the posture-switchable robot, the method comprises following steps of controlling the posture-switchable robot to sense reference motor data of the motors after an adjustment condition is satisfied, retrieving initial motor data corresponding to an initial posture, calculating compensation data of the motors according to the reference motor data and the initial motor data, calculate an adjustment motor data according to the compensation data and a built-in motor data corresponding to a built-in posture after receiving a posture-switching instruction for appointing the built-in posture, and controlling the motors to drive according to the adjustment motor data for making the posture-switchable robot to show the adjusted built-in posture.

One of the exemplary embodiments, a posture-switchable robot comprises a plurality of motors connected to a plurality of drive structures, a plurality of sensing units respectively arranged on the motors, a storage unit configured to store an adjustment condition, an initial motor data corresponding to an initial posture and a built-in motor data corresponding to a built-in posture, and a microcontroller unit electrically connected to the motors, the sensing units and the storage unit. The motors are configured to drive the drive structures to switch a posture of the posture-switchable robot. The sensing units are configured to sense the motors. The microcontroller unit retrieving a reference motor data of the motors via the sensing units after the adjustment condition is satisfied and calculating compensation data of the motors according to the reference motor data and the initial motor data. The microcontroller unit calculates an adjustment motor data according to the compensation data and the built-in motor data. The microcontroller unit controls the motors to drive according to the adjustment motor data for making the posture-switchable robot show the adjusted built-in posture after a posture-switching instruction for appointing the built-in posture is triggered.

The user can adjust the postures of the posture-switchable robot intuitively without dismounting the motors and a motor calibration instrument via the present disclosed example.

### BRIEF DESCRIPTION OF DRAWING

The features of the present disclosed example believed to be novel are set forth with particularity in the appended claims. The present disclosed example itself, however, may be best understood by reference to the following detailed description of the present disclosed example, which describes an exemplary embodiment of the present disclosed example, taken in conjunction with the accompanying drawings, in which:
FIG. 1 is an architecture diagram of a posture-switchable robot according to one embodiment of the present disclosed example;
FIG. 2 is a schematic view of an appearance of a posture-switchable robot according to one embodiment of the present disclosed example;
FIG. 3 is a flowchart of a method of adjusting posture according to a first embodiment of the present disclosed example;
FIG. 4 is a flowchart of a configuration of a method of adjusting posture according to a second embodiment of the present disclosed example;
FIG. 5 is a flowchart of an operation of a method of adjusting posture according to a second embodiment of the present disclosed example;
FIG. 6A is a schematic view of reference motor data of calibrating a posture according to the present disclosed example;
FIG. 6B is a schematic view of initial motor data of calibrating a posture according to the present disclosed example;
FIG. 6C is a schematic view of compensation data of calibrating a posture according to the present disclosed example;
FIG. 7A is a schematic view of built-in motor data of calibrating a posture according to the present disclosed example;
FIG. 7B is a schematic view of compensation data of calibrating a posture according to the present disclosed example;
FIG. 7C is a schematic view of adjustment motor data of calibrating a posture according to the present disclosed example;
FIG. 8A is a schematic view of reference motor data of personalizing a posture according to the present disclosed example;
FIG. 8B is a schematic view of initial motor data of personalizing a posture according to the present disclosed example;
FIG. 8C is a schematic view of compensation data of personalizing a posture according to the present disclosed example;
FIG. 9A is a schematic view of built-in motor data of personalizing a posture according to the present disclosed example;
FIG. 9B is a schematic view of compensation data of personalizing a posture according to the present disclosed example; and
FIG. 9C is a schematic view of adjustment motor data of personalizing a posture according to the present disclosed example.

### DETAILED DESCRIPTION OF THE INVENTION

In cooperation with attached drawings, the technical contents and detailed description of the present disclosed example are described thereinafter according to a preferable embodiment, being not used to limit its executing scope. Any equivalent variation and modification made according to appended claims is all covered by the claims claimed by the present disclosed example.

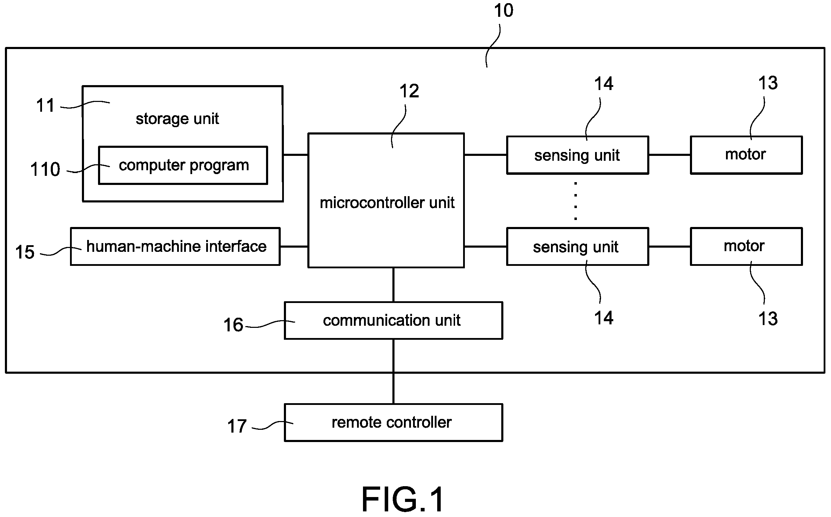

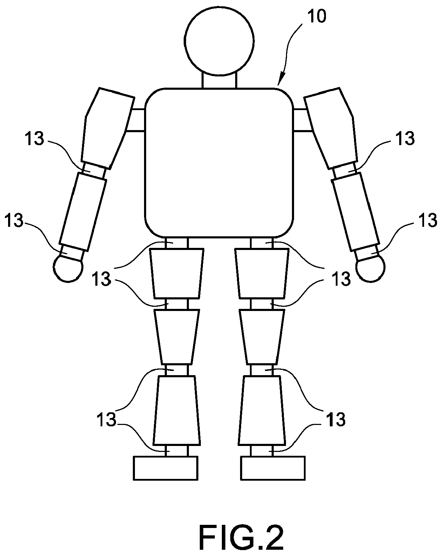

Please refer to FIG. 1 and FIG. 2, FIG. 1 is an architecture diagram of a posture-switchable robot according to one embodiment of the present disclosed example, and FIG. 2 is a schematic view of an appearance of a posture-switchable robot according to one embodiment of the present disclosed example. As shown in figures, a posture-switchable robot 10 (hereinafter robot 10 for abbreviation, the robot 10 may be a biped robot as shown in FIG. 2, a bionic robot, one or more mechanical arm(s) or the other robots having the motors and the multi-axis machine components for switching between the different postures) is disclosed in the present disclosed example, the robot 10 has an ability of switching its posture according to a user operation. The robot 10 mainly comprises a storage unit 11 configured to store data, a plurality of motors 13 and a microcontroller unit 12 electrically connected to above components and configured to control the robot 10.

The motors 13 are respectively connected to a plurality of drive structures (such as gear sets, transmission shafts or the other mechanical components having an ability of passing motive force). The motors are configured to provide motive force to the drive structures for pushing the drive structures to switch a posture of the robot 10. For example, after the specific motor(s) provides the motive power to the drive structures of a hand of the robot 10, the robot may show the posture(s) of putting its hand up, putting its hand down or bending its arm.

The microcontroller unit 12 may control each of the motors 13 to output the motive power. One of the exemplary embodiments, the storage unit 11 records a plurality of motor data respectively corresponding to a plurality of postures (such as the initial motor data of an initial posture or the built-in motor data of a built-in posture described later). The motor data respectively corresponding to the postures are configured and stored in the storage unit 11 before the robot 10 leaves the factory. The microcontroller unit 12 may control the motors 13 according to the motor data of any posture to respectively provide the different motive power for making the robot 10 to show the posture.

One of the exemplary embodiments, the robot 10 may comprise a plurality of sensing units 14 electrically connected to the microcontroller unit 12. The sensing units 14 are respectively arranged on the motors 13 and configured to sense a rotational status of each of the motors 13 respectively (such as sensing a rotational position, a rotational rate or a rotational current of each of the motors 13) for generating the corresponding motor data. Moreover, the microcontroller unit 12 determines that the robot 10 had shown the designated posture after the sensed motor data is consistent with the designated motor data.

One of the exemplary embodiments, each of the sensing units 14 may comprise a rotary encoder. Each sensing unit 14 may sense a current rotational position or a current rotational angle of each motor 13, and encodes the sensed rotational position or the sensed rotational angle into the analog or digital signal.

Take 10-bits rotary encoder for example, if a rotatable angle of the motor 13 is 310 degrees, the rotary encoder may map a range of 0 degrees to 310 degrees on a range of value 1 to value 1023. For example, the rotary encoder may output the value 0 if the current rotational position of the motor 13 is 0 degrees, and output the value 1023 if the current rotational position of the motor 13 is 310 degrees. Thus, the microcontroller unit 12 may control the motors 13 more accurately via the encoded value.

One of the exemplary embodiments, the robot 10 may comprise a human-machine interface 15 (such as a light indicator, a speaker, one or more button(s) or the other input/output components) electrically connected to the microcontroller unit 12. The user may input an operation by the human-machine interface 15 for making the microcontroller unit 12 to execute a specific instruction (such as switching to a configuration mode, switching to an operation mode, execution of a posture-switching instruction designated a specific posture and so forth) or get a current status (such as the current mode or the remining electricity) of the robot 10 by the human-machine interface 15.

One of the exemplary embodiments, the robot 10 may comprise a communication unit 16 (such as a Bluetooth transceiver, a Zig-Bee transceiver, a Wi-Fi transceiver, a Sub-1GHz transceiver, or the other wireless transceivers) electrically connected to the microcontroller unit 12. The user may operate a remote controller 17 (such as a dedicated remote controller for the robot 10 or a smartphone installed a corresponding application program for the robot 10) having been paired with the communication unit 16 for making the microcontroller unit 12 to execute the designated instruction or getting and displaying the current status of the robot 10 via the remote controller 17.

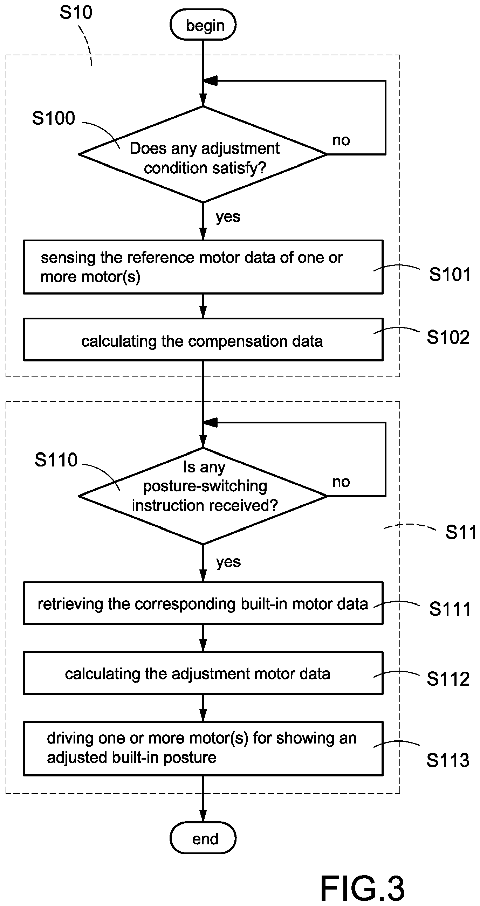

Please refer to FIG.3 simultaneously, FIG. 3 is a flowchart of a method of adjusting posture according to a first embodiment of the present disclosed example. A method of adjusting posture is further disclosed in the present disclosed example, the method of adjusting posture is main applied to the robot 10 as shown in FIG. 1 and/or FIG. 2.

One of the exemplary embodiments, the storage unit 11 comprises a non-transitory computer-readable media and stores a computer program 100. The computer program 110 (such as a firmware of the robot 10) records a plurality of computer-readable codes. The microcontroller unit 12 may execute the computer program 100 to control the robot 10 to perform each step of the method of adjusting posture of each embodiment of the present disclosed example. Moreover, the user may operate the human-machine interface 15 or the remote controller 17 to control the robot 10 to switch between the configuration mode and the operation mode.

As shown in FIG. 3, the user firstly adjusts the current posture of the robot 10 under the configuration mode manually (step S10) when the user would like to adjust the postures of the robot 10 (such as calibrating its postures or personalizing the postures).

More specifically, under the configuration mode, the microcontroller unit 12 may load a default adjustment condition (such as timing a default adjustment time, receipt of an adjustment signal or sensing an adjustment operation via monitoring the motors 13) from the storage unit 11, and determines whether any adjustment condition is satisfied (step S100). Moreover, the microcontroller unit 12 senses the current reference motor data of the motors by the sensing units 14 after the adjustment condition is satisfied (step S101), and continuously determines whether any adjustment condition is satisfied if all the adjustment conditions don't satisfy. The above-mentioned reference motor data may comprise a numerical value corresponding to the current position of each motor 13 and may correspond to a posture which the user expects.

Take the adjustment condition being configured to time a default adjustment time for example, the user may adjust the current posture of the robots 10 manually for showing the expected posture during timing the default adjustment time. Take the adjustment condition being configured to receiving an adjustment signal for example, the user may operate the human-machine interface 15 or the remote controller 17 for triggering the adjustment signal after the robot 10 has shown the expected posture. Take the adjustment condition being configured to sense a posture-adjusting operation for example, the microcontroller unit 12 may monitor the motor data of the motors by the sensing units 14 for determining whether the user is doing a posture-adjusting operation to the robot 10, and may determine that the posture-adjusting operation is done after detecting that the motor data stops changing and configure the current motor data as the reference motor data.

Then, the microcontroller unit 12 loads the initial motor data from the storage unit 11, calculates the compensation data of the motors according to the reference motor data and the initial motor data (step S101), and stores the compensation data in the storage unit 11. Thus, the microcontroller unit 12 completes a configuration of adjusting posture and leaves the configuration mode.

Then, the user may operate the robot 10 under the operation mode for making the robot 10 show the designated posture if the user would like to switch the robot's posture (step S11).

More specifically, the microcontroller unit 12 under the operation mode may determine whether any posture-switching instruction used to designate a built-in posture is received (step S110), and keeps detecting if it doesn't receive any posture-switching instruction.

For example, the user may input the posture-switching instruction by the human-machine interface 15 or the remote controller 17, or the robot 10 may generate the posture-switching instruction by itself.

The microcontroller unit 12 loads the built-in motor data corresponding to a built-in posture from the storage unit 11 after receipt of any posture-switching instruction used to designate a built-in posture (step S111), and retrieves the compensation data calculated according to the initial posture in advance.

Then, the microcontroller unit 12 calculates the motor data according to the retrieved built-in motor data and the compensation data (step S112), and controls the motors 13 to provide motive power to gear the drive structure according to the calculated adjustment motor data for making the robot 10 to show the built-in posture adjusted according to the compensation values (step S113).

The present disclosed example can make the user adjust the postures of the robot intuitively without dismounting the motors and a motor calibration instrument.

The present disclosed example can effectively reduce the time of manually adjusting the other postures by the user via automatically adjusting the built-in postures according to the compensation value calculated based on the initial posture.

The embodiment shown in FIG. 3 is configured to calculate the adjustment motor data of the designated posture according to the compensation data and the motor data corresponding to the designated posture after receipt of the posture-switching instruction, but this specific example is not intended to limit the scope of the present disclosed example.

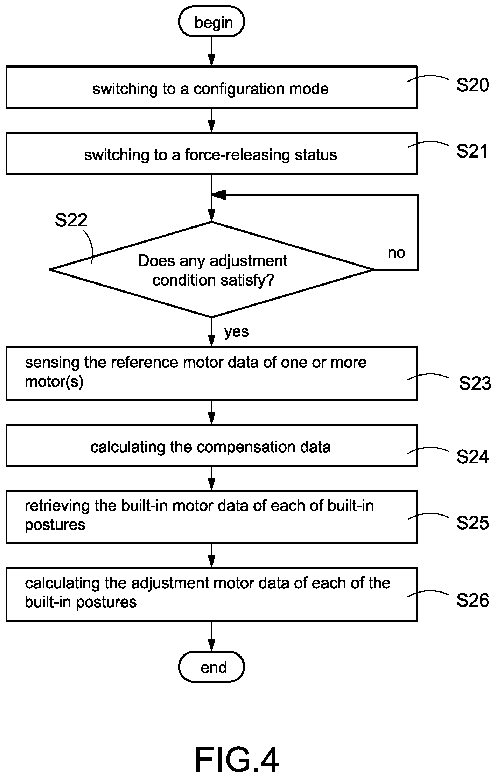

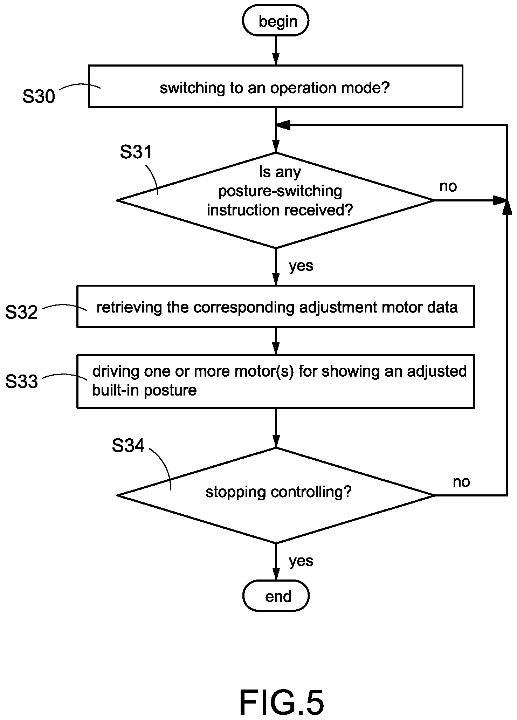

Please refer to FIG. 4 and FIG. 5 simultaneously, FIG. 4 is a flowchart of a configuration of a method of adjusting posture according to a second embodiment of the present disclosed example, and FIG. 5 is a flowchart of an operation of a method of adjusting posture according to a second embodiment of the present disclosed example. Compare to the embodiment as shown in FIG. 3, the embodiment of FIG.4 and FIG. 5 is configured to calculate the adjustment motor data of each of the built-in postures under the configuration mode in advance and load the corresponding adjustment motor data directly under the operation mode after receipt of the posture-switching instruction. Thus, the calculation of adjustment motor data under the operation mode is omitted in this embodiment of the present disclosed example, and the continuous operations to the robot 10 become smoother.

As shown in FIG. 4, The user may operate the robot 10 to switching to the configuration mode (such as inputting an operation of switching to the configuration mode) for adjusting the postures if the user would like to adjust the postures of the robot 10 (step S20). Then, the microcontroller unit 12 controls all of the motors 13 to switching to a force-releasing status for reducing a torque of each of the motors 13 (step S21).

Please be noted that, for making the robot 10 maintain the current posture and prevent the robot 10 from overturning, the motors 13 must provide the torque to the drive structure continuously for making the drive structure be fixed in the current position. In this status, the user must pay the considerable force for adjusting the current posture of the robot 10 manually.

Thus, the present disclosed example can make the user adjust the current posture of the robot 10 into the expected posture easily via controlling all of the motors 13 to switch to the force-releasing status.

Then, the robot 10 detects whether the adjustment condition (such as timing a default adjustment time, receipt of an adjustment signal or sensing an adjustment operation via monitoring the motors 13) is satisfied after switching to the force-releasing status (step S22), and senses the reference motor data of the motors 13 after the adjustment condition is satisfied (step S23).

Then, the microcontroller unit 12 may retrieve the current coding position (called the reference coding position) via the rotary encoder of each sensing unit 14 after the robot 10 had been adjusted and show a user-expected posture (such as the standing posture which the user expects) and configure the reference coding position as the reference motor data (step S23).

Then, the microcontroller unit 12 loads the initial motor data of the initial posture (such as the standing posture) from the storage unit 11, and calculates the compensation data of the motors 13 according to a difference between the reference motor data and the initial motor data (step S24).

One of the exemplary embodiments, the initial motor data may respectively comprise a plurality of initial coding positions respectively corresponding to the motors 13, and the compensation value comprises the compensation value of each motor 13. The microcontroller unit 12 is configured to calculate a difference value between the reference coding position of each of the motors 13 and the initial coding position corresponding to the same motors 13, and configures the difference value of each motor 13 as the compensation value.

Then, the microcontroller unit 12 loads all of the built-in motor data corresponding to all of the built-in postures from the storage unit 11 (the built-in posture may comprise the initial posture, such as standing posture, and the other built-in motor data (step S25, the built-in motor data may comprise the built-in motor data of the initial posture and the built-in motor data of the other built-in postures) of built-in postures (such as putting the right hand up or going straight).

Then, the microcontroller unit 12 calculates the corresponding adjustment motor data according to the built-in motor data of each of the built-in postures and compensation data (step S26) and stores the adjustment motor data of each of the built-in postures in the storage unit 11. Then, the microcontroller unit completes the configuration of adjusting postures and leaves the configuration mode.

One of the exemplary embodiments, the adjustment motor data comprises an adjustment position of each motor 13. The microcontroller unit 12 is configured to add the compensation value of each motor 13 to a built-in coding position of each motor 13 recorded in the built-in motor data of each built-in posture and configure the result as the adjustment position of each motor 13 corresponding to the built-in posture, such as adding the compensation value of the motor 13 to the built-in coding position of each motor 13 recorded in the built-in motor data of putting right hand up as the adjustment position of the posture of putting right hand up of each motor 13.

Then, as shown in FIG 5, the user may operate the robot 10 to switching to the operation mode if the user would like to switch the current posture of the robot 10 (step S30, such as inputting an operation of switching to the operation mode).

Under the operation mode, the microcontroller unit 12 may determine whether the robot 10 receives any posture-switching instruction designated a posture (comprising the initial posture and the other built-in postures) by the human-machine interface 15 or the communication unit 16 (step S31). The microcontroller unit performs the step S31 again if the microcontroller unit doesn't receive the posture-switching instruction. If the robot 10 receives any posture-switching instruction, the microcontroller unit 12 loads the adjustment motor data corresponding to the built-in posture from the storage unit 11 (step S32) and controls the motors 13 to provide motive power to gear the drive structure according to the adjustment motor data for making the robot 10 to show the adjusted built-in posture (step S33).

Then, the microcontroller unit determines whether the control is terminated (step S34, such as the user shutting the robot 10 down). The microcontroller unit 12 terminates the method of adjusting posture if the microcontroller unit 12 determines that the control is terminated. Otherwise, the microcontroller unit 12 performs the step S31 again.

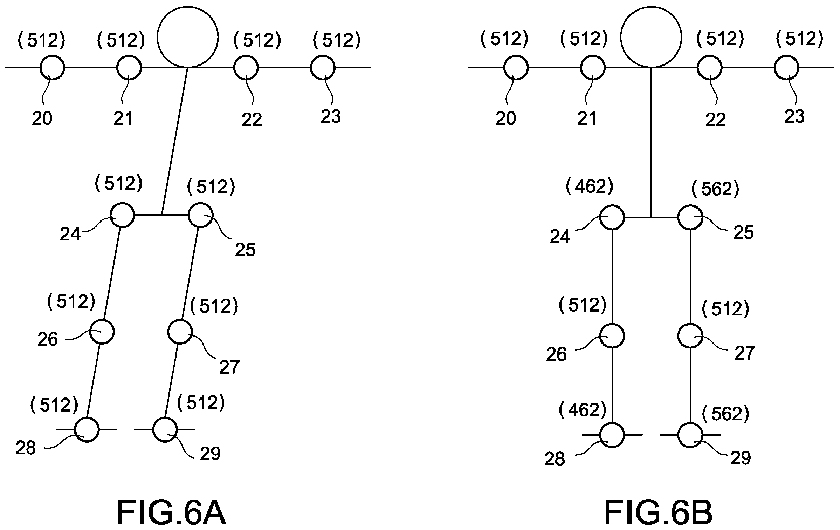

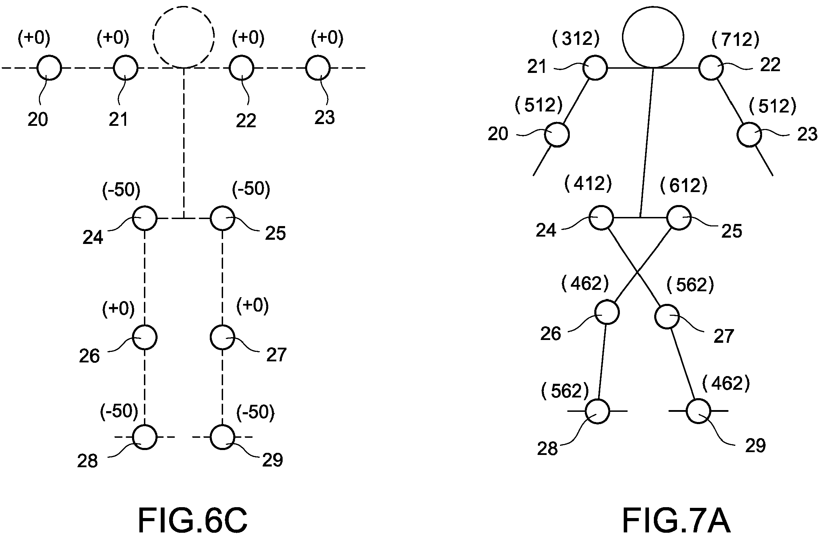

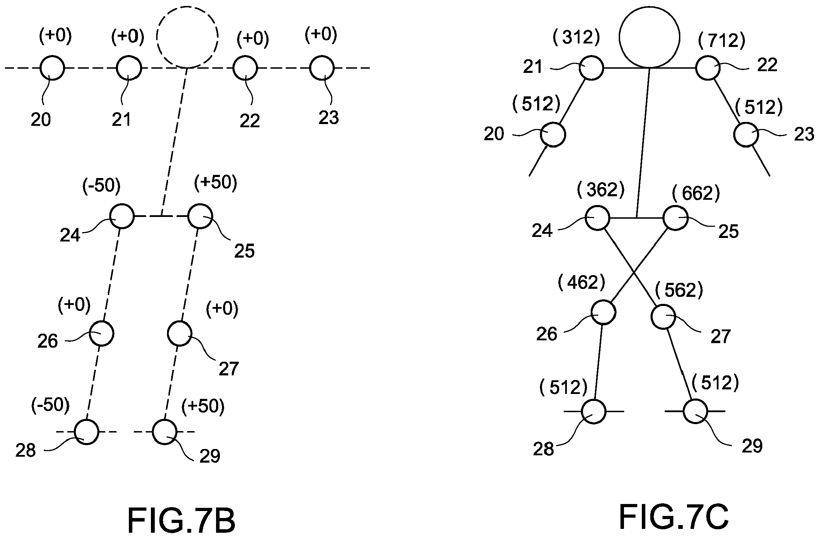

Please refer to FIG. 6A to FIG 7C simultaneously. FIG. 6A is a schematic view of reference motor data of calibrating a posture according to the present disclosed example, FIG. 6B is a schematic view of initial motor data of calibrating a posture according to the present disclosed example, FIG. 6C is a schematic view of compensation data of calibrating a posture according to the present disclosed example, FIG. 7A is a schematic view of built-in motor data of calibrating a posture according to the present disclosed example, FIG. 7B is a schematic view of compensation data of calibrating a posture according to the present disclosed example, and FIG. 7C is a schematic view of adjustment motor data of calibrating a posture according to the present disclosed example. FIG. 6A to FIG. 7C are used to explain how to calibrate the aberrant postures (take reclining backward for example) of the robot 10 in the present disclosed example. In this example, the robot 10 comprises ten motors 20-29, the motor data comprises a coding position of each of the motors 20-29, and the compensation data comprises a compensation value of each of the motors 20-29.

First, an actual posture of the robot 10 with aberrant postures becomes reclining forward (as shown in FIG. 6A) after the robot 10 switches to a standing posture according to the initial motor data of the standing posture (the standing posture is the initial posture in this example). Then, the user may adjust the current posture of the robot 10 under the configuration mode into the correct standing posture manually, and the robot 10 senses the reference motor data of all of the motors 20-29 (as shown in FIG. 6B). Then, the robot 10 may calculate the compensation data according to the initial motor data of the standing posture and the reference motor data (as shown in FIG. 6C).

Then, the robot 10 may switch to the operation mode and retrieve the built-in motor data (as shown in FIG. 7A, the original walking posture of the robot 10 reclines backward) corresponding to a walking posture (the walking posture is the built-in posture in this example) and the compensation data calculated in advance after receipt of a posture-switching instruction indicating the robot 10 to walk. Then, the robot 10 calculates the adjustment motor data of the walking posture according to the built-in motor data of the walking posture and the compensation data, and controls the robot 10 to switch to the adjusted walking posture (such as the robot 10 shown in FIG. 7C shows the walking posture without reclining backward) according to the adjustment motor data.

The present disclosed example can make the user calibrate the robot 10 with the aberrant postures intuitively.

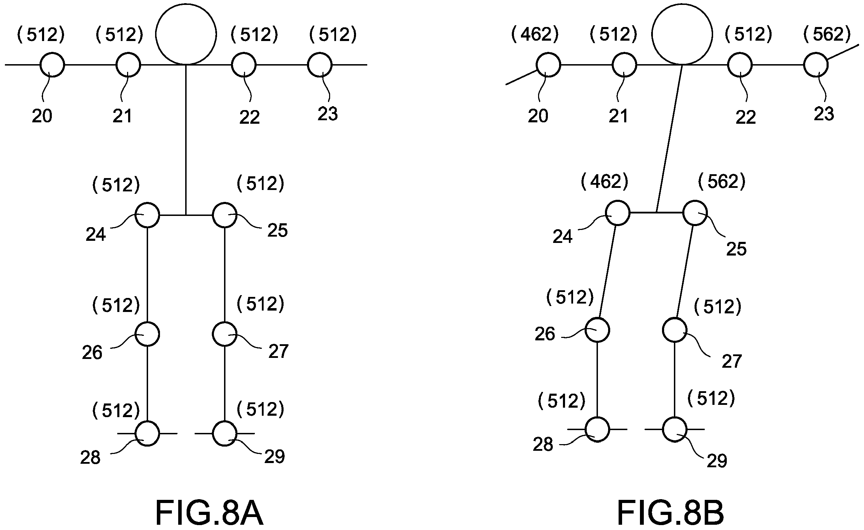

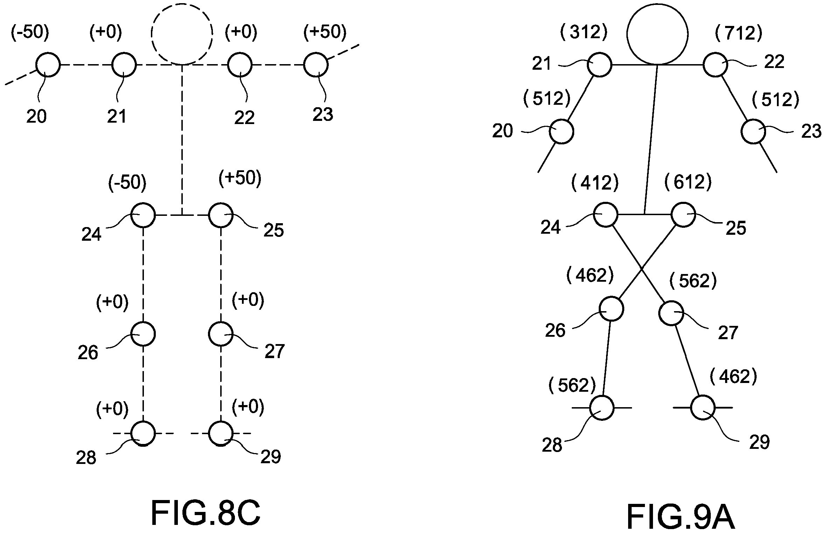

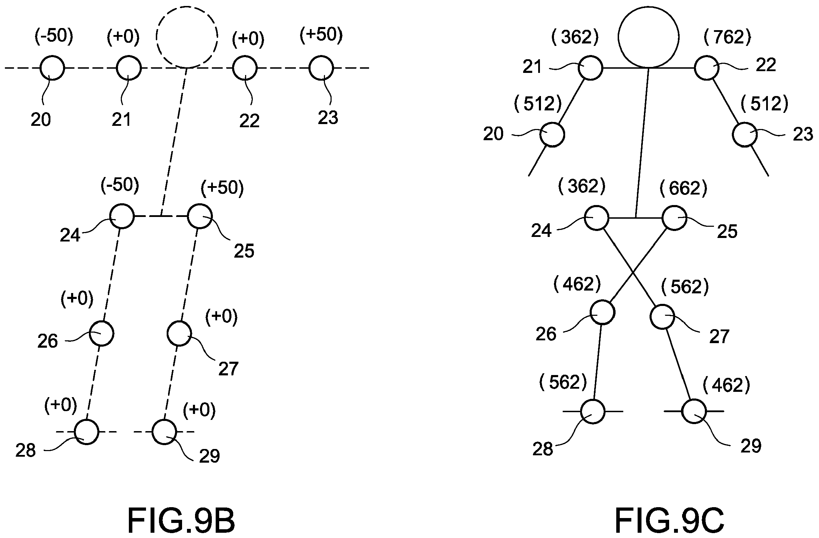

Please refer to FIG. 8A to FIG. 9C. FIG. 8A is a schematic view of reference motor data of personalizing a posture according to the present disclosed example, FIG. 8B is a schematic view of initial motor data of personalizing a posture according to the present disclosed example, FIG. 8C is a schematic view of compensation data of personalizing a posture according to the present disclosed example, FIG. 9A is a schematic view of built-in motor data of personalizing a posture according to the present disclosed example, FIG. 9B is a schematic view of compensation data of personalizing a posture according to the present disclosed example, and FIG. 9C is a schematic view of adjustment motor data of personalizing a posture according to the present disclosed example. FIG. 8A to FIG. 9C are used to explain how to adjust the normal postures of the robot 10 for making the robot 10 show the personal style of the user (take reclining backward for example) in the present disclosed example. In this example, the robot 10 comprises ten motors 20-29, the compensation data comprises a compensation value of each of the motors 20-29, and the adjustment motor data comprise an adjustment position of each of the motors 20-29.

First, the normal robot 10 can show the normal standing posture as shown in FIG. 8A according to the initial motor data of standing posture (the standing posture is the initial posture in this example). Then, the user may adjust the current posture of the robot 10 under the configuration mode into the expected standing posture manually (the expected standing posture reclines backward in this example), and the robot 10 senses the reference motor data of all of the motors 20-29 (as shown in FIG. 8B). Then, the robot 10 may calculate the compensation data according to the initial motor data of the standing posture and the reference motor data (as shown in FIG. 8C).

Then, the robot 10 may switch to the operation mode and retrieve the built-in motor data (as shown in FIG. 9A, the original walking posture of the robot 10 is normal) corresponding to a walking posture (the walking posture is the built-in posture in this example) and the compensation data calculated in advance after receipt of a posture-switching instruction indicating the robot 10 to walk. Then, the robot 10 calculates the adjustment motor data of the walking posture according to the built-in motor data of the walking posture and the compensation data, and controls the robot 10 to switch to the adjusted walking posture (such as the robot 10 shown in FIG. 9C shows the walking posture is with reclining backward) according to the adjustment motor data.

The present disclosed example can make the user adjust the postures of the robot 10 for making the robot 10 show the personal style of the user intuitively.

## Claims

1. A method of adjusting posture applied to a posture-switchable robot (10), the posture-switchable robot (10) comprising a plurality of motors (13, 20-29) for switching a posture of the posture-switchable robot (10), the method comprising following steps:
a) controlling the posture-switchable robot (10) to sense reference motor data of the motors (13, 20-29) after an adjustment condition is satisfied;
b) retrieving initial motor data corresponding to an initial posture;
c) calculating compensation data of the motors (13, 20-29) according to the reference motor data and the initial motor data;
d) calculate an adjustment motor data according to the compensation data and a built-in motor data corresponding to a built-in posture after receiving a posture-switching instruction for designated the built-in posture; and
e) controlling the motors (13, 20-29) to drive according to the adjustment motor data for making the posture-switchable robot (10) to show the adjusted built-in posture.

2. The method of adjusting posture according to claim 1, wherein the step a) is configured to comprise following steps:
a1) controlling the motors (13, 20-29) to switching to a force-releasing status for reducing a torque of each of the motors (13, 20-29); and
a2) sensing the reference motor data of the motors (13, 20-29) after the adjustment condition is satisfied.

3. The method of adjusting posture according to claim 2, wherein the adjustment condition is timing an adjustment time, receipt of an adjustment signal or a posture-switching operation is detected by monitoring the motors (13, 20-29).

4. The method of adjusting posture according to claim 1, wherein the step c) is configured to calculate a compensation value of each of the motors (13, 20-29) as the compensation data according to a plurality of reference coding positions of the motors (13, 20-29) recorded in the reference motor data and a plurality of initial coding positions of the motors (13, 20-29) recorded in the initial motor data.

5. The method of adjusting posture according to claim 4, wherein the step d) is configured to calculate the adjustment motor data according to the compensation value of each of the motors (13,20-29) and a plurality of built-in coding positions of the motors (13, 20-29) recorded in the built-in motor data after receiving the posture-switching instruction.

6. The method of adjusting posture according to claim 5, wherein the step c) is configured to calculate a difference value between the reference coding positions of each of the motors (13, 20-29) and the initial coding positions of the same motor (13, 20-29) as the compensation value of each of the motors (13, 20-29); the step d) is configured to add the compensation value of each of the motors (13, 20-29) to the built-in coding positions of each of the motors (13, 20-29) as the adjustment motor data.

7. A posture-switchable robot (10), comprising:
a plurality of motors (13, 20-29) connected to a plurality of drive structures, the motors (13, 20-29) being configured to drive the drive structures to switch a posture of the posture-switchable robot (10);
a plurality of sensing units (14) respectively arranged on the motors (13, 20-29), the sensing units (14) being configured to sense the motors (13, 20-29);
a storage unit (11) configured to store an adjustment condition, an initial motor data corresponding to an initial posture and a built-in motor data corresponding to a built-in posture; and
a microcontroller unit (12) electrically connected to the motors (13, 20-29), the sensing units (14) and the storage unit (11), the microcontroller unit (12) retrieving a reference motor data of the motors (13, 20-29) via the sensing units (14) after the adjustment condition is satisfied, and calculating compensation data of the motors (13, 20-29) according to the reference motor data and the initial motor data;
wherein the microcontroller unit (12) calculates an adjustment motor data according to the compensation data and the built-in motor data;
wherein the microcontroller unit (12) controls the motors (13, 20-29) according to the adjustment motor data for making the posture-switchable robot (10) show the adjusted built-in posture after a posture-switching instruction for designated the built-in posture is triggered.

8. The posture-switchable robot (10) according to claim 7, wherein the microcontroller unit (12) is configured to firstly control the motors (13, 20-29) to switch to a force-releasing status for reducing a torque of each of the motors (13, 20-29) and retrieve the reference motor data of the motors (13, 20-29) after the adjustment condition is satisfied.

9. The posture-switchable robot (10) according to claim 8, wherein the adjustment condition is timing an adjustment time, receipt of an adjustment signal or a posture-switching operation is detected by monitoring the motors (13, 20-29).

10. The posture-switchable robot (10) according to claim 7, wherein the microcontroller unit (12) is configured to calculate a compensation value of each of the motors (13, 20-29) as the compensation data according to a plurality of reference coding positions of the motors (13, 20-29) recorded in the reference motor data and a plurality of initial coding positions of the motors (13, 20-29) recorded in the initial motor data.

11. The posture-switchable robot (10) according to claim 10, wherein the microcontroller unit (12) is configured to calculate the adjustment motor data according to the compensation value of each of the motors (13,20-29) and a plurality of built-in coding positions of the motors (13, 20-29) recorded in the built-in motor data after the posture-switching instruction is triggered.

12. The posture-switchable robot (10) according to claim 11, wherein the microcontroller unit (12) is configured to calculate a difference value between the reference coding position of each of the motors (13, 20-29) and the initial coding position of the same motor (13,20-29) as the compensation value of each of the motors (13, 20-29), and add the compensation value of each of the motors (13, 20-29) to the built-in coding positions of each of the motors (13, 20-29) as the adjustment motor data.
